# EUROPEAN PATENT APPLICATION

(11) **EP 2 018 804 A1**
(43) Date of publication of application: **28.01.2009**
(21) Application number: 08380109.2
(22) Date of filing: 04.04.2008
(51) Int. Cl.: A01G 9/02, A01G 27/04

(54) **Jardinière**

(30) Priority: 27.07.2007 ES 200702102
(71) Applicant: Hobby-Flower De España, S.A., 08007 Barcelona (ES)
(72) Inventor: Cabre Roige, Luis, 08037 Barcelona (ES)
(74) Representative: Durán Moya, Luis-Alfonso

(57) **Abstract**

Jardinière (1), of the type which comprises a main body (11) which defines a lower space (2) intended to receive the irrigation liquid and an upper region or space (3) intended to receive the planting soil, the two spaces being separated by a wall (4), and at least one capillary strand (5) which passes through said wall (4) in order to transport water by capillary action from said lower space (2) to the upper space (3), characterized in that the main body (11) has at least one opening (18,19) in the region corresponding to the lower space (2), said opening (18,19) connecting said lower space (2) with the outside of the jardinière (1).

## Description

The present invention is intended to disclose a jardinière which makes it possible to provide the plants with automatic irrigation, ensuring at all times correct and uniform irrigation of the plant arranged in the tub, said jardinière possessing great versatility with regard to use and location.

In particular, the jardinière of the present invention has its irrigation system based on the presence of capillary strands, the ends of which are intended to be introduced into the irrigation liquid, the irrigation water stored in a lower space of the tub being transported by capillary action along each strand to the planting soil of the tub.

Said irrigation system has numerous advantages, among which may be mentioned the fact that the water supply is provided uniformly in the space, continuous over time and proceeding from a region below the plant, so that the irrigation conditions which are customarily encountered by the majority of plants in their natural environment are faithfully reproduced.

This system is customarily used for decorating interiors by means of plants. However, this type of jardinière is not usually used in outdoor arrangements, mainly owing to the size limitations of such jardinières, thereby requiring the use of many jardinières to produce arrangements typical of outdoor jardinières, the above-mentioned advantage of centralised irrigation thus being lost.

It is an aim of the present invention to disclose a jardinière suitable both for indoors and for outdoors which has the advantage of being able to constitute arrangements of jardinières with centralised irrigation.

In particular, the present invention consists of a jardinière of the type which comprises a main body which defines a lower space intended to receive the irrigation liquid and an upper region or space intended to receive the planting soil, the two spaces being separated by a wall, and at least one capillary strand which passes through said wall in order to transport water by capillary action from the said lower space to the said upper space, which is characterized in that the main body has at least one opening in the region corresponding to the lower space, said opening connecting said lower space to the outside of the jardinière. Preferably, at least two of the said openings will be provided.

The said openings may be used for connecting various jardinières to one another, in such a way that it is possible to provide centralised irrigation from one of the jardinières which form an arrangement of various jardinières, inasmuch as the water delivered, for example, through a vertical pipe which connects the part above the region of the planting soil to the lower irrigation part of a jardinière is transmitted from one jardinière to another via said openings and, for example, via a connecting piece and/or a flexible hose for example.

The jardinières may be connected to one another by means of connecting pieces adapted to the openings, when they are adjacent, or, for example, by means of flexible hoses in the case where the jardinières are located at a distance from one another. For this purpose, adaptor pieces may for example be arranged in the openings. It is also possible to place an overflow element in some of the openings. In this way it is possible to avoid an excess of water in the event of excessive irrigation or of possible damage caused by unexpected periods of precipitation.

On the other hand, the existence of the openings does not hinder the use of the jardinières of the present invention in interior arrangements, inasmuch as said openings may be blocked by means of plugs adapted thereto.

For greater understanding of the invention, some drawings of an embodiment of the present invention are appended by way of non-limiting example.

Figure 1 is a perspective view of an embodiment of a jardinière according to the present invention.

Figure 2 is a perspective view of another different embodiment of a jardinière according to the present invention.

Figure 3 is a perspective view of a third embodiment of different shape of a jardinière according to the present invention.

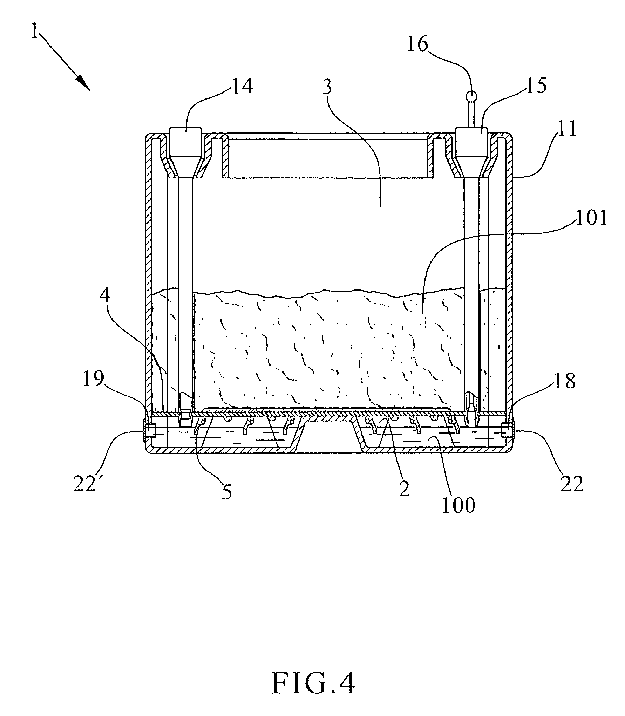

Figure 4 is a sectional side view in which can be seen the internal elements of a possible embodiment of the jardinière according to the present invention, such as any one of those shown in the three previous figures.

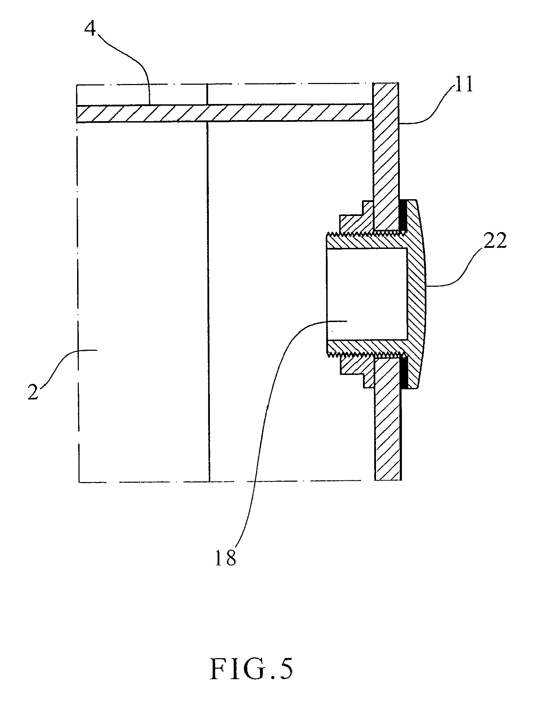

Figure 5 is a sectional detail view in which can be seen an opening of a jardinière according to the present invention, in which the opening has been blocked by means of a plug.

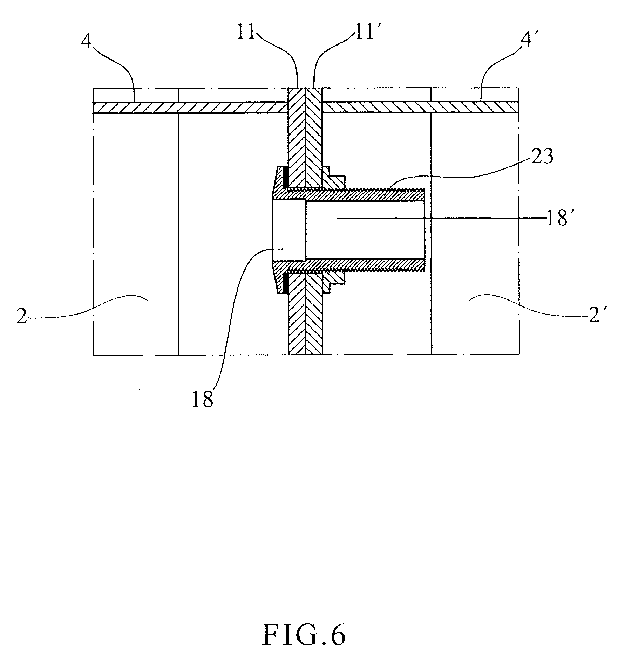

Figure 6 shows a sectional detail view of an embodiment of an arrangement of jardinières according to the present invention, in which two adjacent jardinières are connected via respective openings and a direct connecting piece.

Figure 7 is a sectional detail side view of an embodiment in which an opening of a jardinière according to the present invention is occupied by a drainage element.

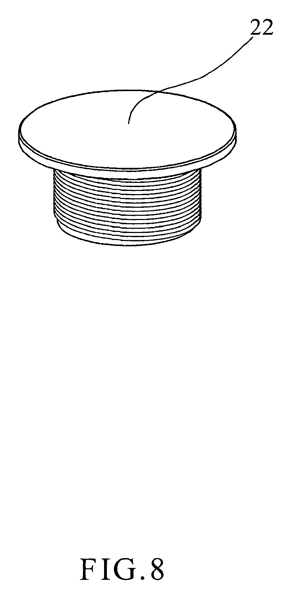

Figure 8 is a perspective view of an example of a plug member for the opening of a jardinière according to the present invention.

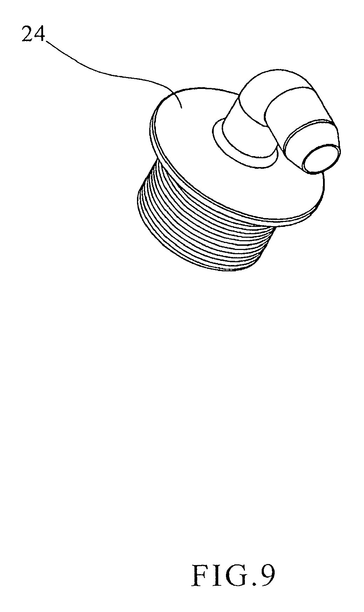

Figure 9 is a perspective view of a possible embodiment of a drainage element for an opening of a jardinière according to the present invention.

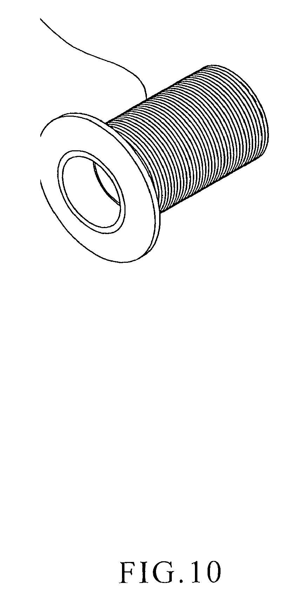

Figure 10 is a perspective view of a possible embodiment of a direct connecting piece between two jardinières according to the present invention.

Figure 11 is a plan view from above in which can be seen an arrangement of three jardinières according to the present invention, in an adjacent arrangement and connected to one another.

Figure 12 is a plan view from above of another arrangement of jardinières of the present invention, connected to one another.

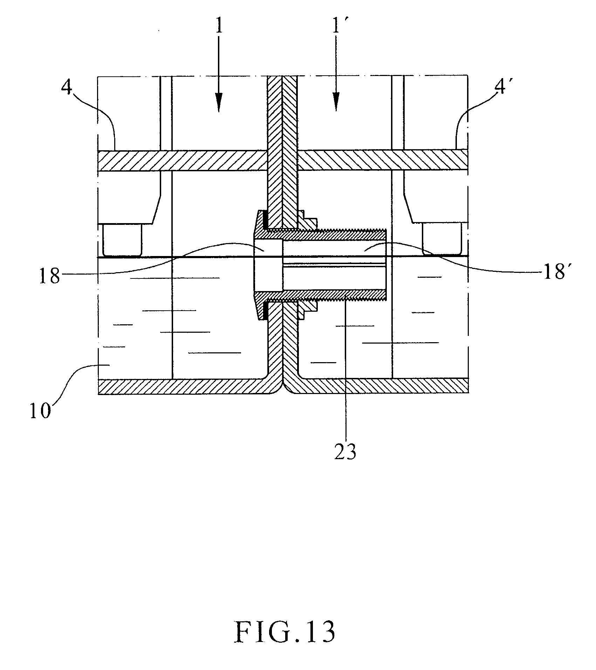

Figure 13 is a sectional detail view in which can be seen a water connection between two jardinières of the present invention.

Figure 14 shows a plan view from above of an arrangement of jardinières according to the present invention, with different types of connection.

Figure 15 is a detail view, partly in section, in which can be seen two jardinières of the present invention, connected via a flexible hose.

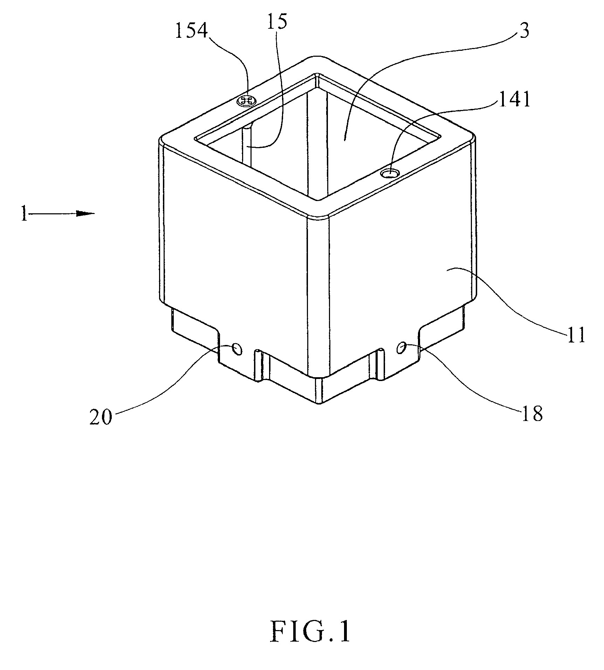

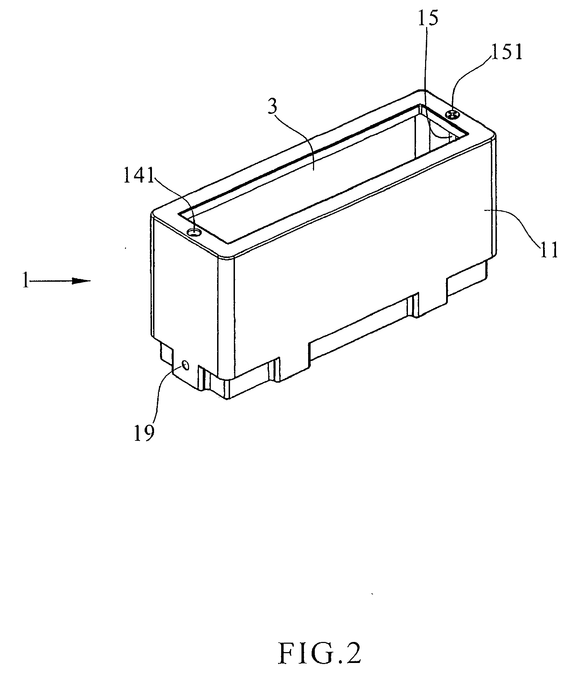

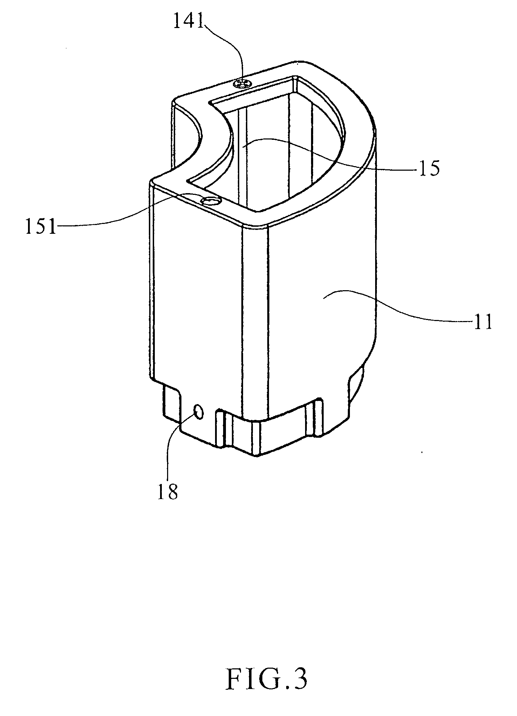

As will be observed from the drawings, the jardinière embodiments 1, 1', 1", 1'", 1"" shown in the examples, comprise a main body 11 which may be of different shapes, such as, for example, a cuboid shape (see Figure 1), a rectangular shape (Figure 2), a quadrant shape (Figure 3) or any other suitable shape. The main body 11 has an internal space 3 which forms an upper region or space intended to receive the planting soil 101. The inner cavity 3 may be of the most convenient shape, preferably corresponding to the outer shape of the body 11, 11', having a lower base 4, 4' formed, for example, by a false bottom provided with a multiplicity of openings for the passage of strands of fibres 5 intended to permit the passage by capillary action of the water 100 contained in a lower region 2 within the jardinière, intended to receive the irrigation liquid. Feeding by means of capillary strands makes it possible to adjust the entry of water into the upper region 5. By means of the arrangement indicated, the jardinière is equipped to receive the decorative plants, allowing regular and gradual moistening of the soil and in addition permitting easy control of the water level and periodic refilling of the water reservoir to a suitable level.

In order to fill the lower region 2 with water, the jardinière 1 has a vertical pipe 14 which connects the lower region 2, 2' with a region above the region occupied by the soil being planted 101 and which serves to fill the lower region 2, 2' with water. Also in the case shown, the jardinières likewise have another upper pipe 15 which houses a float with an upper stem 16 which acts as a filling level indicator. The pipes 14, 15 are housed in corresponding openings 141, 151 of the main body 11 of the jardinières.

In a manner characteristic of the present invention, the jardinières shown have at least one opening 18, 19, 20, 18' which connects the lower region 2 with the outside of the jardinière. This opening may be used for connecting the jardinières with other jardinières or for arranging an emptying or drainage element in order to avoid excessive levels of irrigation water. When the jardinières are connected to one another via the lower region corresponding to the irrigation water, the water can pass from a lower region of a jardinière to the lower region of another jardinière, such that it is not necessary to top up the level in each of the jardinières by using the pipe 14.

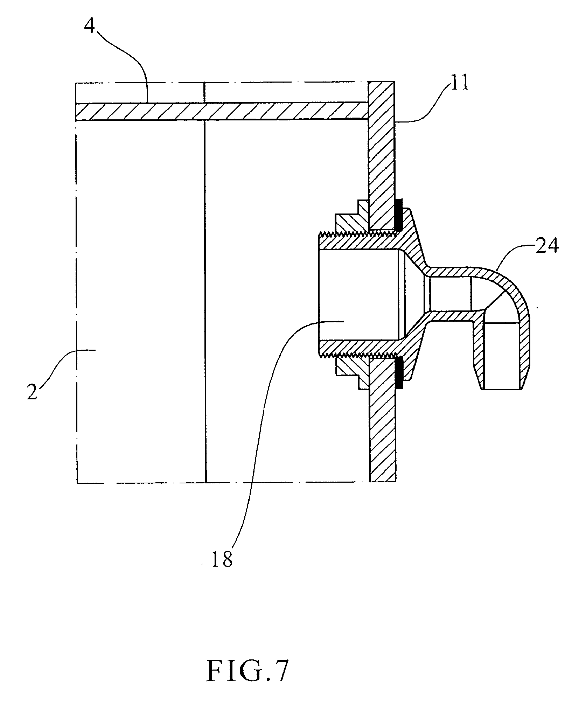

As will be observed in the different drawings, the opening may remain blocked by means of a plug 22, if this is necessary. In the case where all the openings are blocked by plugs 22, the jardinière can behave according to previously known techniques, being able to be used indoors, for example. In Figure 7 a detail can be seen in which a drain element 24 located in an opening 18 can be observed. This permits the drainage of the lower region 2 in the case of an excessive level of water. This is very important inasmuch as when irrigation is centralised it may happen that there are jardinières at different levels. Or, in the case of outdoor jardinières, it could happen that periods of abundant precipitation fill the lower region with irrigation water 2, 2' to an unacceptable level.

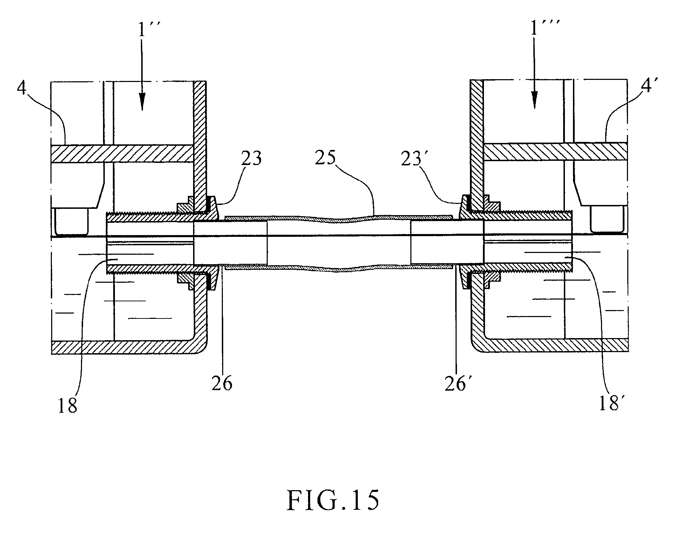

The connection between different jardinières may be provided by means of a direct connecting piece 23, in the case where the jardinières 1, 1' are adjacent to one another, or by means of the use of hoses 25, 25' in the case where the jardinières 1, 1", 1'" are distanced from one another, as can be seen in Figure 15, and the connecting pieces 23, 23' could have a region for adaptation to the hose 25.

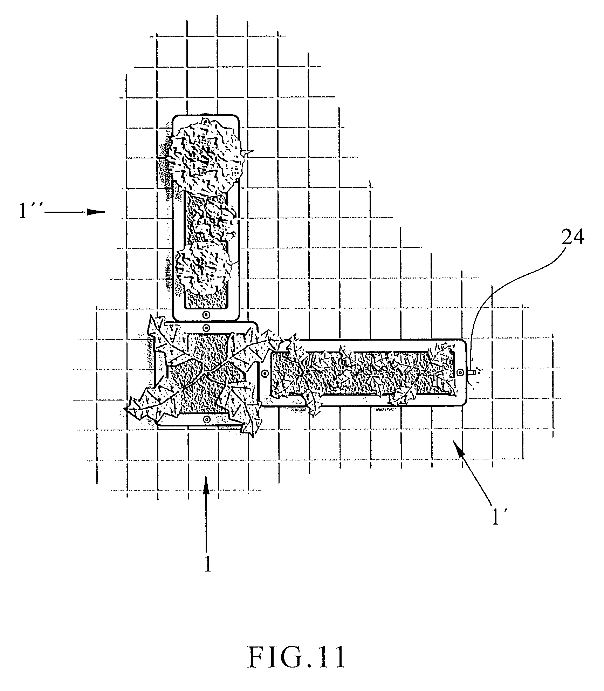

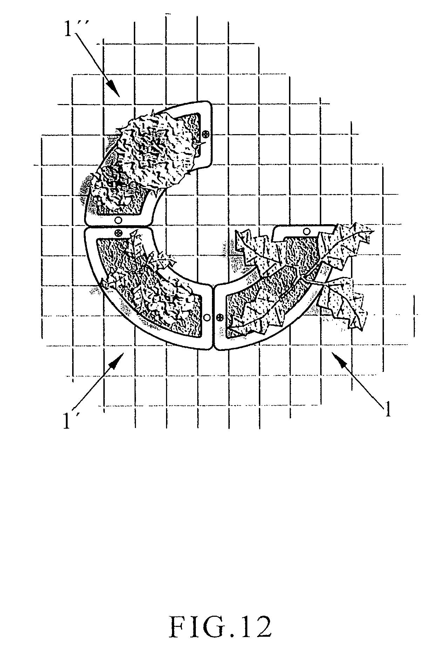

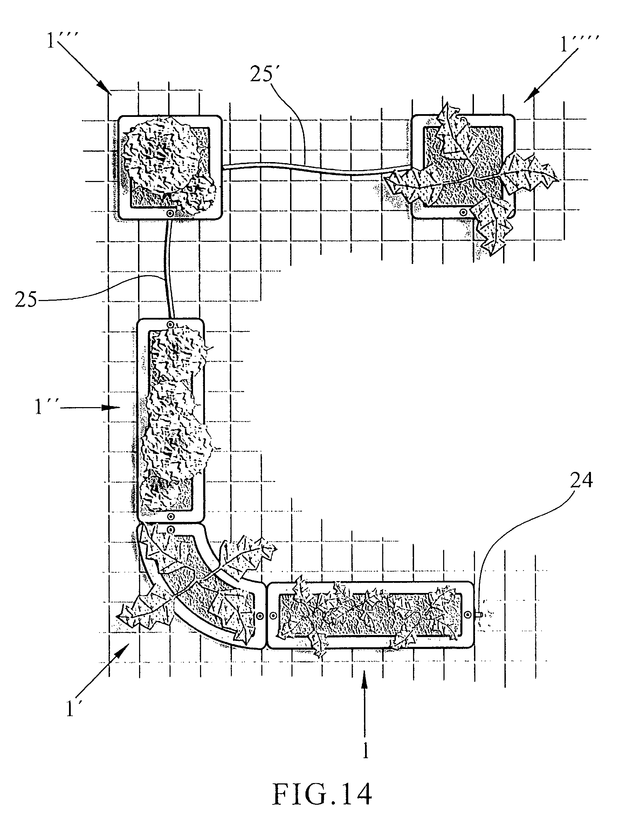

As will be observed in Figures 11, 12 and 14, the present invention renders the jardinières modular and permits arrangements of jardinières of any type, increasing the decorative possibilities thereof.

Although the invention has been described with respect to preferred exemplary embodiments, these should not be regarded as limiting the invention, which will be defined by the widest interpretation of the following claims.

## Claims

1. Jardinière, of the type which comprises a main body which defines a lower space intended to receive the irrigation liquid and an upper region or space intended to receive the planting soil, the two spaces being separated by a wall, and at least one capillary strand which passes through said wall in order to transport water by capillary action from said lower space to the upper space, **characterized in that** the main body has at least one opening in the region corresponding to the lower space, said opening connecting said lower space with the outside of the jardinière.

2. Jardinière according to claim 1, **characterized in that** the jardinière comprises at least two of the said openings.

3. Jardinière according to claim 1 or 2, **characterized in that** one of said openings is blocked by a plug.

4. Jardinière according to any one of claims 1 to 3, **characterized in that** a drain outflow is arranged in one of said openings.

5. Jardinière according to any one of claims 1 to 4, **characterized in that** a connecting part for connection to another jardinière is arranged in one of said openings.

6. Jardinière according to claim 5, **characterized in that** one of said openings has an adaptor piece for a flexible hose.

7. Jardinière according to any one of claims 1 to 6, **characterized in that** it has a vertical irrigation pipe which passes through said wall, connecting said lower region with a region above the region intended for the planting soil.
